# FASCICULE DE BREVET EUROPEEN

(11) **EP 0 251 944 B1**
(45) Date de publication et mention de la délivrance du brevet: **10.03.1993**
(21) Numéro de dépôt: 87420167.6
(22) Date de dépôt: 18.06.1987
(51) Int. Cl.: C12G 1/02

(54) **Procédé de contrôle thermique du processus de vinification et dispositif de mise en oeuvre de ce procédé**
Verfahren zur Regelung der Temperatur bei der Weinherstellung und Vorrichtung zur Durchführung des Verfahrens
Thermally controlled vinification process and apparatus for performing this process

(30) Priorité: 19.06.1986 FR 8609552
(43) Date de publication de la demande: 07.01.1988
(73) Titulaire: THERMIQUE GENERALE ET VINICOLE (Société Anonyme), F-69480 Anse (FR)
(72) Inventeur: Laude-Bousquet, Adrien, F-69480 Anse (FR)
(74) Mandataire: Maureau, Philippe

(56) Documents cités:
- DE-C- 148 759
- FR-A- 632 131
- FR-A- 827 482
- FR-A- 1 546 047
- FR-A- 2 170 111
- FR-A- 2 332 326
- GB-A- 2 017 895
- US-A- 2 206 421

## Description

La présente invention concerne un procédé de contrôle thermique du processus de vinification et le dispositif de mise en oeuvre de ce procédé.

On sait que le processus de vinification met en jeu, dans une même cuve deux phases, un phase moût constituée par les grappes ou des grains de raisin, et une phase jus, dans lesquelles se produisent des phénomènes de fermentation, que l'on s'efforce de maitriser, afin d'optimiser le rendement quantitatif et surtout qualitatif du vin obtenu.

Cette optimisation pose toutefois de nombreux problèmes en raison des différences importantes existant entre les températures de fermentation préférentielles pour chacune de ces phases.

Lors du processus de fermentation de la phase moût, la température peut monter jusqu'à 40-45°C et il conviendrait de la maintenir aux environs de 30-35°C pour favoriser la finition de la maturation et la macération intracellulaire, ceci afin de mieux extraire la couleur, sans risquer un arrêt de cette fermentation, du fait d'une température trop élevée. Par contre, dans la phase jus, c'est une température de l'ordre de 18°C qui est la plus favorable pour assurer la transformation du sucre en alcool et le développement des arômes.

Il faut, de plus, noter que la température de la vendange elle-même peut varier fortement selon qu'elle a été effectuée par temps chaud (risque de surchauffe des grappes) ou par temps froid (démarrage trop lent de la fermentation) qui impose de chauffer au départ l'ensemble grappes-jus.

Il existe actuellement sur le marché différents dispositifs de réfrigération et de chauffage des moûts et des jus.

Un dispositif décrit dans le FR-A-827 482 est constitué d'un serpentin rigide disposé à poste fixe à l'intérieur de la cuve à environ 0,15 mètre au-dessus de la couche de marc, ce qui limite son utilisation à la vendange égrappée et foulée.

Ce serpentin est solidaire de la cuve et ne peut donc suivre la progression du chapeau de marc, notamment dans le cas de vinification de grappes entières.

Certains dispositifs effectuent les opérations de réfrigération ou de chauffage en pompant le jus en partie basse de la cuve et en le faisant passer dans un échangeur généralement en acier inoxydable pour le renvoyer sur le "chapeau" de marc se formant en partie haute de la cuve.

Ces dispositifs présentent pourtant certains inconvénients. En effet, la mise en mouvement des jus, par l'intermédiaire de pompes dont les qualités oenologiques sont souvent médiocres, dégrade souvent la qualité du vin.

D'autre part, les phénomènes de surchauffe ou de suréfrigération liés à des débits anarchiques ou à des encrassements souvent mal maîtrisés sont des sources d'aléas.

Dans le cas de cuves en acier inoxydable, on effectue souvent un refroidissement par ruissellement d'eau autour de la cuve.

Il faut toutefois noter que, du fait du diamètre important des cuves, ce procédé ne saurait assurer un refroidissement à coeur des produits qu'elles renferment.

Par ailleurs, les fortes aérations nécessaires pour favoriser l'évaporation de l'eau ne sont pas souvent respectées.

Ce procédé permet plus un maintien en température qu'une véritable réfrigération ; de plus, il agit sur l'ensemble de la matière contenue dans la cuve, sans qu'il soit possible d'agir sélectivement sur la phase moût et sur la phase jus.

On utilise aussi des cuves en inox ceinturées de dispositifs de circulation d'eau chaude ou glacée. Les inconvénients de ces dispositif sont nombreux : on constate des phénomènes de surchauffe ou de sur-refroidissement sur la surface d'échange ; le diamètre important des cuves ne permet pas de garantir une efficacité véritable dans l'ensemble de la cuve.

Par ailleurs, le gradient des températures favorise trop les phénomènes de convection que ne sont pas souhaitables si on veut optimiser la vinification par le biais de la stratification des températures.

Enfin, selon certains procédés, on immerge dans la cuve des échangeurs appelés de façon plus générale "drapeaux". Ces échangeurs sont immergés verticalement dans les cuves et reçoivent une circulation de fluide caloporteur qui crée un mouvement de convection.

L'efficacité de ces systèmes est très contestée en raison de la conductibilité thermique faible de la phase moût, peu riche en jus.

D'autre part, la manipulation de ces "drapeaux" d'un prix élevé est malaisée à cause de leur poids, de leur encombrement, et de leur mauvaise résistance aux chocs.

Enfin, et comme dans les procédés évoqués précédemment, ils favorisent les phénomènes de convection au détriment des phénomènes de stratification de températures.

L'invention s'est donnée pour but de proposer un procédé de contrôle thermique du processus de vinification qui remédie aux inconvénients mentionnés ci-avant et permet d'optimiser facilement et sans investissement coûteux, les températures de vinification et notamment les températures de la phase moût et de la phase jus, créant un phénomène de stratification de ces températures, ce qui favorise notamment la formation d'un système de piston naturel.

Ce procédé est caractérisé en ce qu'on effectue un contrôle des températures des différentes étapes du processus de vinification, par l'intermédiaire d'un fluide caloporteur circulant dans au moins un échangeur souple, indépendant de la cuve de vinification, flottant sur le jus de vinification, et dont l'action thermo-régulatrice s'exerce dans un plan horizontal, en favorisant ainsi un phénomène de stratification des températures.

Avantageusement, le fluide caloporteur circule dans au moins deux échangeurs souples, l'un situé en phase moût, et l'autre en phase jus, et la température du fluide caloporteur est adaptée aux différentes étapes du processus de vinification.

Le dispositif de mise en oeuvre du procédé selon l'invention comporte au moins un échangeur thermique amovible, avancé pour flotter sur le jus de vinification, comprenant une structure tubulaire souple ou semi-rigide, réalisée en un matériau neutre, prévue pour être placée dans un plan horizontal, et comportant des tuyaux d'amenée et de sortie.

La structure tubulaire selon l'invention est avantageusement constituée d'un élément tubulaire continu disposé en spirale.

Selon un mode de réalisation particulier de l'invention, les spires de l'élément tubulaire continu sont réunies par une couche continue de matière.

Selon un autre mode de réalisation de l'invention, les spires de l'élément tubulaire continu sont réunies par des ponts de matière disposés de façon discontinue.

Les dimensions de l'échangeur thermique sont adaptées pour occuper sensiblement toute la surface de la cuve de vinification à laquelle il est destiné.

Les dimensions de l'échangeur thermique peuvent aussi être inférieures à la surface de la cuve de vinification, et adaptées pour constituer un module juxtaposable avec un ou plusieurs modules similaires.

Avantageusement, l'échangeur thermique comprend une structure en filet ou treillage prévue pour soutenir la structure tubulaire.

La présente invention sera mieux comprise et ses avantages ressortiront bien de la description qui suit en référence au dessin schématique annexé dans lequel :
Figure 1 est une vue en coupe très schématique d'une cuve de vendange équipée en sa partie inférieure et avant chargement d'un dispositif de contrôle thermique selon l'invention ;
Figure 2 est une vue similaire à figure 1, représentant la cuve pleine équipée de dispositifs de contrôle thermique selon l'invention ;
Figure 3 est une vue de dessus en plan d'un premier mode de réalisation du dispositif de contrôle thermique selon l'invention ;
Figure 4 est une vue de dessus en plan d'un autre mode de réalisation du dispositif de contrôle thermique selon l'invention ;
Figure 5 représente une vue de dessus en plan d'un autre mode de réalisation du dispositif de contrôle thermique selon l'invention ;
Figure 6 est une vue en coupe du dispositif de figure 5 modifié par adjonction d'un flotteur ;
Figure 7 représente un schéma d'installation thermodynamique type avec pilotage thermostatique du dispositif selon l'invention.

Sur les figures, le dispositif de contrôle thermique selon l'invention est désigné de façon générale par **2,** la cuve de vinification par **3,** la phase jus par **4** et la phase moût par **5**.

Le dispositif de contrôle thermique ou échangeur thermique **2** selon l'invention est réalisé en une matière synthétique souple ou semi-rigide présentant une excellente résistance mécanique entre -10°C et +80°C, une parfaite inertie, lui permettant de rester insensible à un séjour prolongé dans le moût et dans le jus, ainsi que des qualités alimentaires assurant une neutralité parfaite empêchant toute transmission de goût. De plus, et selon l'invention, la densité de la matière constitutive de l'échangeur thermique est inférieure à la densité du jus de vinification, ce qui permettra audit échangeur de flotter sur le jus comme il sera expliqué ci-après. Le polyéthylène alimentaire convient tout spécialement à cet effet.

Il s'agit, en effet, d'une matière d'un prix abordable et qu'il est facile de conformer à la forme que l'on désire communiquer à l'échangeur selon l'invention. Sa résistance lui permet, en outre, de supporter des manipulations nombreuses et quelque fois brutales ; l'échangeur ainsi obtenu est facile à manipuler, à laver avec les moyens de lavage modernes : vapeur par exemple.

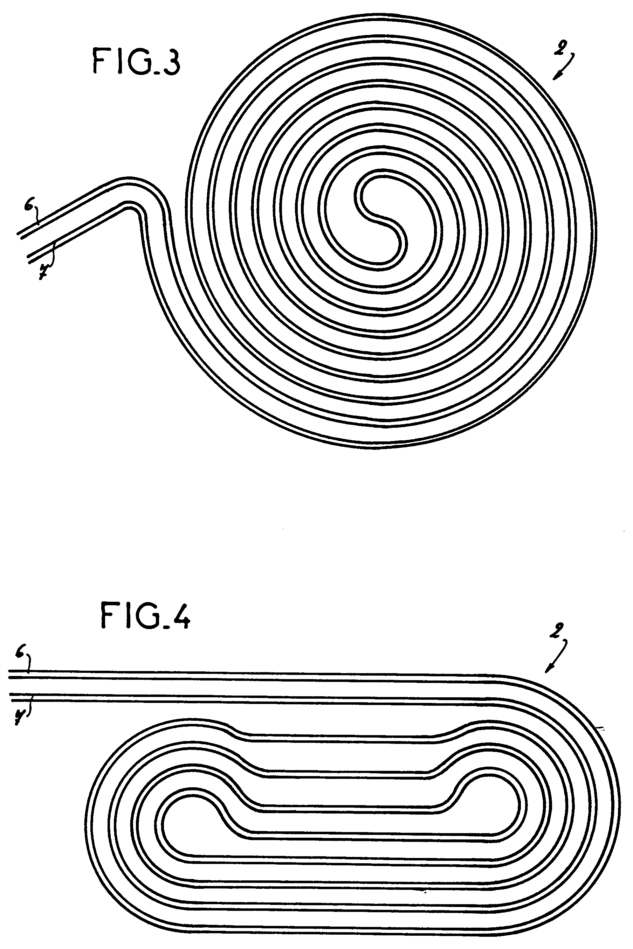

Dans le mode de réalisation représenté à la figure 3, l'échangeur thermique **2** est prévu pour occuper toute la surface de la cuve et est constitué d'un tube continu 15/19 disposé en spirale avec un écartement d'environ 15 centimètres entre les spires selon une disposition sensiblement circulaire. La longueur totale du tube est d'environ 50 mètres et la surface d'échange dudit tube est d'environ 3 m².

Dans le mode de réalisation représenté à la figure 4, l'échangeur thermique **2** est prévu pour constituer un module justaposable avec un ou plusieurs autres modules similaires, ceci notamment afin d'en faciliter la manipulation ; il est constitué d'un tube continu de 15/19 disposé en spirale aplatie dont la longueur totale varie selon la dimension du module.

Le tube continu peut également comporter, venant de moulage, des ponts de matière (non représentés) communiquant à l'ensemble une certaine tenue.

Une couche continue de matière peut également réunir les spirales du tube.

Des tubulures d'amenée et de sortie sont prévues au moulage pour prolonger les tubes en spirales.

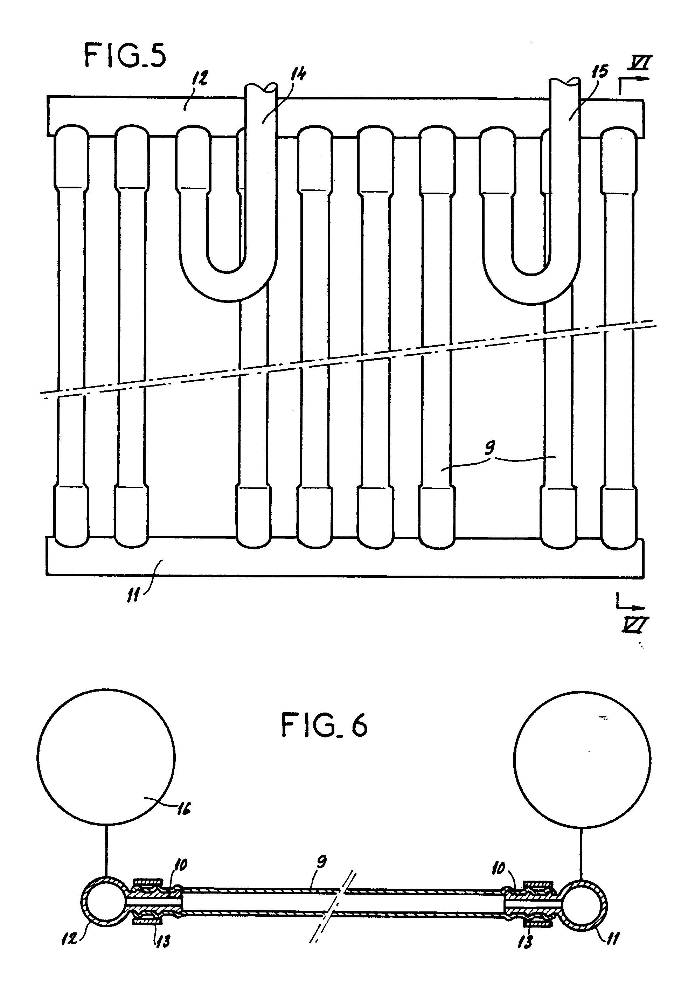

On voit sur les figures 5 et 6 un autre mode de réalisation de l'échangeur thermique **2**.

Dans ce mode de réalisation, une série de tubes **9** est raccordée à des embouts de raccordement **10** disposés sur deux collecteurs **11** et **12** par l'intermédiaire de colliers à oreilles en inox sertis **13**.

Des tubulures **14** et **15** d'amenée et de sortie du fluide caloporteur sont branchées sur l'un au moins des collecteurs **11,12**.

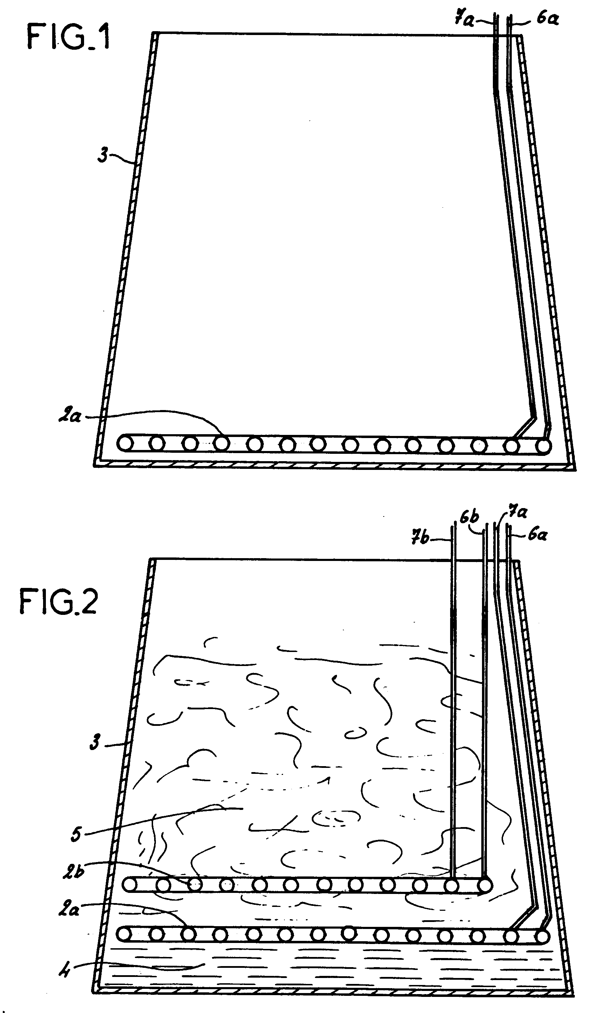

Les tubes **9** sont réalisés, comme dans le mode de réalisation représenté aux figures 1 à 4 en une matière synthétique neutre, souple ou semi-rigide et dont la densité est inférieure à celle du jus de vinification ; le polyéthylène alimentaire convient tout spécialement à cet effet ; les tubes **9** sont de faible diamètre et de faible épaisseur. On peut introduire facilement cet échangeur thermique dans la cuve, par un un trou d'homme ; il suffit pour cela de présenter le collecteur par un bout et de resserrer les tubes sur eux-mêmes vers l'autre bout du même collecteur.

Ce mode de réalisation permet de laisser les tubes libres, ce qui les rend moins vulnérables aux éventuels coups de fourche lors du décuvage.

Les collecteurs **11** et **12** peuvent être réalisés en matière synthétique moulée, de densité inférieure à celle du jus de vinification ; ils peuvent aussi être réalisés en acier inoxydable ; dans ce cas, les embouts **10** sont soudés sur les collecteurs **11,12** et les collecteurs eux-mêmes sont reliés à un ou plusieurs flotteurs **16**.

Ces flotteurs peuvent être prévus pour communiquer à l'échangeur **2** une flottabilité permanente ; ils sont alors rigides.

Si l'on désire communiquer à l'échangeur **2** une flottabilité variable, pouvant être éventuellement commandée automatiquement, on préfère réaliser ces flotteurs sous forme de structure souple, par exemple à partir de bâches alimentaires que l'on pourra gonfler ou dégonfler à volonté.

Le gaz utilisé pour gonfler ces flotteurs est choisi parmi les gaz inertes ; l'azote convient bien à cet effet, car, en cas de fuite éventuelle, la vendange et le vin ne seront pas altérés ni oxydés.

La présence de ces flotteurs souples permet d'utiliser l'échangeur **2** à bon escient, pour toutes les séquences d'élevage du vin ; ils pourront, en phase de chauffe, être dégonflés et l'échangeur sera placé en position dite "coulé fond de cuve" et en phase de refroidissement, leur gonflement permettra de placer l'échangeur **2** en position dite "flottante".

On donne, ci-après, un exemple des possibilités de placement des flotteurs -et donc de l'échangeur- lors des différentes séquences d'élevage du vin :
1- Début de fermentation, "coulé fond de cuve" : chauffe
2- Fermentation, "flottant" : refroidissement
3- Fermentations malolactiques, "coulé fond de cuve" : chauffe
4- Précipitations tartriques :
   1ère phase : "flottant" : réfrigération jusqu'à environ 0°C suivant le degré alcoolique.
   2ème phase : "coulé fond de cuve" : réfrigération car la densité du vin est alors inversée.
   3ème phase : mise en flottabilité variable par gonflage et dégonflage successifs des flotteurs : création d'une agitation à l'intérieur de la cuve favorisant la concentration des cristaux de tartre.
   4ème phase : "coulé fond de cuve" : maintien de l'ensemble du vin proche de sa température de congélation pendant toute la stabulation.
   5ème phase : "coulé en fond de cuve" pour remise en température du vin, récupération des frigories et transmission directe ou indirecte dans un autre échangeur placé dans une deuxièmme cuve à traiter.
5- Vieillissement du vin, "coulé fond de cuve" : chauffe
6- Conservation, position variable suivant la température extérieure et la température désirée.

Le placement et le mode de fonctionnement des échangeurs thermiques selon l'invention vont maintenant être décrits plus en détail en référence aux figures 1 et 2.

Un premier échangeur **2a** est tout d'abord posé au fond de la cuve **3** (figure 1) ; il peut, bien entendu, s'agir d'un seul échangeur de grande dimension ou d'un jeu d'échangeurs de dimensions moyennes. Les tubulures d'alimentation **6a,7a** sont donc raccordées au réseau de fluide caloporteur (non représenté) à l'extérieur de la cuve.

Une fois la cuve remplie au 1/3 de raisins, on peut placer un deuxième échangeur **2b** qui se trouvera au coeur du grains-grappes, qui permettra à celui-ci de se maintenir en température, et dont les tubulures d'alimentation **6b,7b** sont également reliées au réseau de fluide caloporteur (non représenté) (figure 2).

Dans le cas de "vendanges froides", les échangeurs **2a,2b** sont reliés au circuit d'eau chaude permettant de porter l'ensemble du chargement aux alentours de 25°C pour provoquer le début de la fermentation.

L'échangeur thermique **2a** est ensuite relié au circuit d'eau glacée afin de maintenir en phase jus la température optimale de 18°C favorisant la transformation du sucre en alcool et le développement des arômes.

L'échangeur thermique **2b** peut aussi être relié au circuit d'eau chaude pour maintenir la partie grains-grappes à une température d'environ 30 à 35°C, afin de faciliter la finition de maturation et la macération intra-cellulaire permettant une bonne extraction de la couleur sans besoin de remontage du jus. Tout phénomène de surchauffe du chapeau est très rapidement maîtrisé par un léger remontage.

Il peut être indiqué, spécialement dans le cas d'échangeur de dimensions importantes, de prévoir un dispositif support (non représenté) réalisé également en matière souple, alimentaire et, de préférence, de nature similaire à celle ayant servi à la réalisation de l'échangeur ; il peut s'agir d'un filet ou d'un treillis dont les mailles sont assez larges.

Avant le décuvage, un remontage de la phase jus **4** permettra la réfrigération de l'ensemble à une température de l'ordre de 18°C.

Après ce passage au pressoir, le maintien de la température se fera dans une autre cuve (non représentée) grâce à un échangeur souple horizontal **2,** flottant sur le jus, alimenté en eau glacée et régulé pour maintenir une température de 18°C.

Dans le cas de vinification ne concernant que du jus par exemple la vinification du blanc, l'échangeur **2** souple sera à flottabilité variable en position "coulé fond de cuve", il servira au chauffage. En position flottante, il permettra la réfrigération.

Le générateur d'eau chaude et d'eau glacée peut être une pompe à chaleur eau-eau, la partie condensation servant à chauffer une réserve d'eau chaude et la partie évaporation à refroidir un bac d'eau glacée.

L'alimentation des cuves à l'aide des tuyauteries distributrices d'eau chaude et d'eau glacée, à proximité des cuves, se fait de façon classique à l'aide de vannes, manuelles ou commandées électriquement, ce qui permet un raccordement facile des échangeurs **2**.

Enfin, la régulation des processus décrits ci-avant peut se faire par pilotage thermostatique, par vanne autorégulée, ou par tout autre moyen permettant de réguler le débit en fonction de la température relevée de façon connue en soi par des sondes placées dans le centre de la cuve et dans la phase jus.

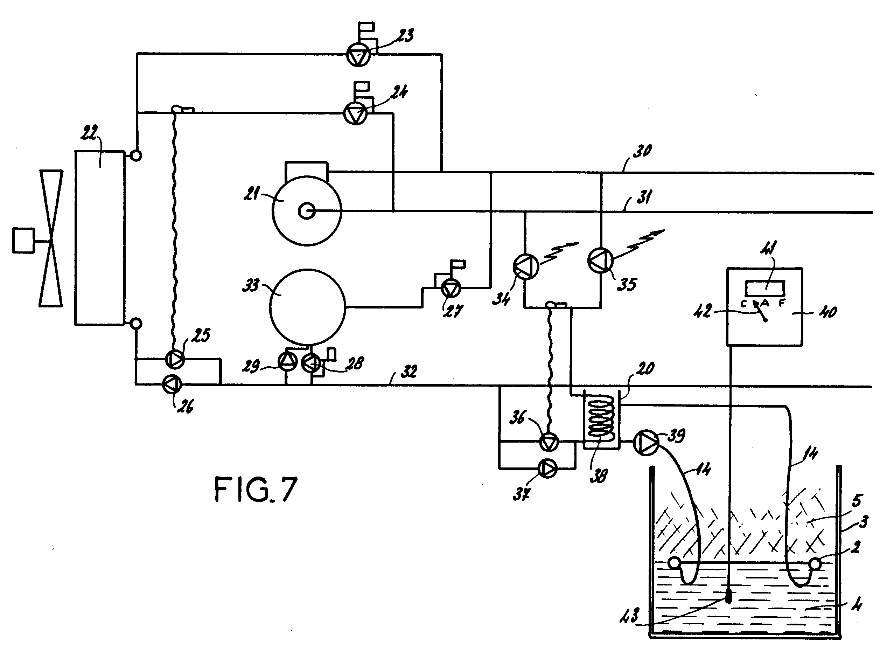

Un exemple d'une installation thermodynamique type assurant le pilotage thermostatique et l'alimentation en calories ou en frigories va maintenant être décrit en détail en référence au schéma représenté à la figure 7.

Il est prévu, afin d'ajuster les puissances thermiques produites aux besoins réels de l'installation, un compresseur frigorifique **21**. Il peut s'agir d'un compresseur unique, à vitesse ou à puissance variable, ou de plusieurs compresseurs frigorifiques, montés en parallèle.

Un condenseur-évaporateur **22,** placé à l'extérieur, a pour but d'assurer le rejet des calories excédentaires ou, le cas échéant, de prendre à l'extérieur le complément calorifique nécessaire.

Une vanne haute pression **23** contrôle la pression de refoulement et la maintient en permanence à un niveau élevé. Si cette pression dépasse le seuil de réglage, cette vanne **23** s'ouvre ; on libère ainsi les gaz comprimés ; ceux-ci viennent se condenser dans le condenseur **22** et reviennent, à l'état liquide, sur la ligne **32** en passant par le clapet de retenue anti-retour **26**.

Une vanne modulante basse pression **24** est régulée par la pression d'aspiration ; si la pression d'aspiration baisse en-dessous du seuil de réglage, cette vanne **24** s'ouvre en admettant des gaz en provenance du condenseur évaporateur **22,** lui-même alimenté par des gaz détendus provenant de la ligne liquide **32,** par l'intermédiaire d'un détendeur thermostatique **25**.

Il est, par ailleurs, prévu un réservoir d'accumulation de liquide **33** qui, selon les conditions de l'exploitation, se remplit ou se vide. Une vanne de régulation **27** permet, par ailleurs, de maintenir, le réservoir **33** à une pression minimum, par admission de gaz haute pression au-dessus du liquide contenu dans ledit réservoir. Une vanne de régulation **28** assure la décharge de la ligne de liquide **32** dans le réservoir **33** en cas de montée de pression sur cette ligne **32**. Enfin, un clapet anti retour **29** envoit du liquide dans la ligne **32** au cas où la pression sur cette ligne deviendrait inférieure à celle du réservoir **33** pressurisé par la vanne **27**.

L'ensemble des dispositifs décrits ci-avant permet de disposer à tout moment, à chacun des postes d'utilisation, de gaz haute pression-basse pression ou à l'état liquide permettant d'effectuer les opérations décrites ci-après.

Il est, par ailleurs, prévu relié d'une part à l'ensemble des dispositifs ci-avant et, d'autre part, aux tuyauteries **14** de l'échangeur **2** un réservoir-échangeur d'eau chaude et froide **20** en circuit court équipé d'un serpentin **38**.

Il peut être prévu plusieurs réservoirs-échangeurs d'eau chaude et froide **20**, chacun étant commandé à partir d'un tableau de régulation **40** comme décrit ci-avant.Les réservoirs-échangeurs sont prévus pour assurer simultanément le pilotage thermostatique automatique de plusieurs échangeurs **2** selon les besoins de la vinification, de telle sorte que le (ou les) échangeur(s) en phase de refroidissement puisse(nt) transférer leurs calories aux échangeurs en phase de chauffage. Le condensateur-évaporateur **22** vient apporter l'éventuel complément thermique nécessaire.

Ces opérations de régulation sont commandées à partir du tableau de régulation **40** équipé d'un régulateur **41** éventuellement muni d'un thermostat à affichage digital. Un commutateur **42** permet de sélectionner trois phases : chauffage (C), arrêt (A), refroidissement (F).

Une sonde **43,** immergée dans la phase jus **4,** assure le captage de cette température.

Le processus de régulation va maintenant être décrit.

En phase de chauffe, le commutateur **42** est placé en position chauffage (C). Si le jus **4** est à une température inférieure à la température de consigne affichée sur le régulateur **41,** la vanne **35** s'ouvre et le circulateur **39** est mis en route. L'eau contenue dans le réservoir **20** se réchauffe alors grâce à la condensation des gaz chauds venant de la ligne **30** et admis dans le serpentin **38,** ces gaz retournant ensuite, à l'état liquide, sur la ligne de liquide **32** en passant par le clapet de retenue **37**.

L'eau chaude ainsi produite est véhiculée dans l'échangeur thermique **2** par l'intermédiaire du circulateur **39** et des tuyauteries flexibles de liaison **14**.

Si, maintenant, on désire provoquer une phase de refroidissement, on place le commutateur **42** en position refroidissement (F). Si la température de consigne, au niveau du thermostat-régulateur afficheur-**41**, est supérieure à la température communiquée par la sonde **43,** la vanne **34** s'ouvre et le circulateur **39** se met en marche.

L'eau contenue dans le réservoir-échangeur **20** se refroidit alors grâce à l'évaporation du liquide, qui est introduit par le détendeur thermostatique **36**. L'ouverture de la vanne **34** permet alors aux gaz de rejoindre la ligne d'aspiration **31**. Le circulateur **39** véhicule l'eau ainsi refroidie dans l'échangeur thermique **2** par l'intermédiaire des tuyauteries flexibles de liaison **14**.

La description qui précède permet de mettre en évidence un avantage extrêmement important du dispositif selon l'invention par rapport aux installations classiques de refroidissement et de réchauffage mettant en jeu des volumes importants de liquide caloporteur. En effet, la faible quantité d'eau contenue dans le réservoir-échangeur **20** permet un passage rapide du chaud au froid et exclut tout risque de pollution de la vendange en cas de rupture accidentelle du réseau.

## Revendications

1. Procédé de contrôle thermique du processus de vinification, **caractérisé en ce qu'**on effectue un contrôle des températures des différentes étapes d'un processus de vinification, par l'intermédiaire d'un fluide caloporteur circulant dans au moins un échangeur souple, indépendant de la cuve, flottant sur le jus de vinification, et dont l'action thermorégulatrice s'exerce dans un plan horizontal, en favorisant un phénomène de stratification des températures.

2. Procédé selon la revendication 1, caractérisé en ce que le fluide caloporteur circule dans au moins deux échangeurs souples, l'un situé en phase moût et l'autre en phase jus, et en ce que la température du fluide caloporteur est adaptée aux différentes étapes du processus de vinification.

3. Dispositif pour la mise en oeuvre du procédé selon l'une quelconque des revendications 1 et 2, caractérisé en ce qu'il comporte au moins un échangeur thermique (2) pour la circulation du fluide caloporteur, amovible, agencé pour flotter sur le jus de vinification, comprenant une structure tubulaire souple ou semi-rigide, réalisée en un matériau neutre, prévue pour être placée dans un plan horizontal, et comportant des tuyaux d'amenée et de sortie.

4. Dispositif selon la revendication 3, caractérisé en ce que la structure tubulaire (2) est constituée d'un élément tubulaire continu disposé en spirale aplatie.

5. Dispositif selon la revendication 4, caractérisé en ce que les spires de l'élément tubulaire continu sont réunies par une couche continue de matière

6. Dispositif selon la revendication 4, caractérisée en ce que les spires de l'élément tubulaire continu sont réunies par des ponts de matière disposés de façon discontinue.

7. Dispositif selon la revendication 3, caractérisé en ce que la structure tubulaire (2) est constituée d'un ensemble de tubes (9) reliés à des collecteurs (11,12).

8. Dispositif selon la revendication 3, caractérisé en ce que l'échangeur thermique (2) comprend au moins un flotteur, notamment à flottabilité variable.

9. Dispositif selon la revendication 3, caractérisé en ce que l'échangeur thermique (2) est réalisé en un matériau dont la densité est inférieure à la densité du jus de vinification.

10. Dispositif selon la revendication 3, caractérisé en ce que les dimensions de l'échangeur thermique (2) sont adaptées pour occuper sensiblement toute la surface de la cuve de vinification à laquelle il est destiné.

11. Dispositif selon la revendication 3, caractérisé en ce que les dimensions de l'échangeur thermique (2) sont inférieures à la surface de la cuve de vinification et adaptées pour constituer un module juxtaposable avec un ou plusieurs modules similaires.

12. Dispositif selon la revendication 3, caractérisé en ce que l'échangeur thermique comprend une structure en filet ou treillage, prévue pour soutenir la structure tubulaire.

13. Dispositif selon la revendication 3, caractérisé en ce qu'il est relié à une installation thermodynamique à pilotage thermostatique automatique.

14. Dispositif selon la revendication 13, caractérisé en ce que l'installation thermodynamique à pilotage thermostatique automatique est reliée à au moins un réservoir-échangeur d'eau chaude et froide (20), en circuit court.

15. Dispositif selon la revendication 13, caractérisé en ce qu'il est prévu plusieurs réservoirs-échangeurs (20) pour assurer simultanément le pilotage thermostatique automatique de plusieurs échangeurs (2) selon les besoins de vinification, de telle sorte que le (ou les) échangeur(s) en phase de refroidissement puisse(nt) transférer leurs calories aux échangeurs en phase de chauffage.

16. Dispositif selon la revendication 13, caractérisé en ce que l'installation thermodynamique à pilotage thermostatique est reliée à un condenseur-évaporateur (22) prévu pour assurer un éventuel complément thermique.

## Claims

1. Process for the thermal control of the winemaking process, characterised in that the temperatures of the various stages of a winemaking process are controlled by means of a coolant circulating in at least one flexible heat exchanger, floating on the winemaking juice independently of the winemaking vessel, and whose heat-regulating action is exerted in a horizontal plane, promoting a temperature stratification phenomenon.

2. Process according to Claim 1, characterised in that the coolant circulates in at least two flexible exchangers, one situated in the must phase and the other in the juice phase, and in that the temperature of the coolant is adjusted to the various stages of the winemaking process.

3. Device for implementing the process according to either of Claims 1 and 2, characterised in that it comprises at least one removable heat exchanger (2) for circulating the coolant, arranged so as to float on the winemaking juice, comprising a flexible or semi-rigid tubular structure made from a neutral material, designed to be placed in a horizontal plane, and comprising inlet and outlet pipes.

4. Device according to Claim 3, characterised in that the tubular structure (2) consists of a continuous tubular element arranged in a flattened spiral.

5. Device according to Claim 4, characterized in that the spirals of the continuous tubular element are joined together by a continuous layer of material.

6. Device according to Claim 4, characterised in that the spirals of the continuous tubular element are joined together by bridges consisting of material arranged in a discontinuous manner.

7. Device according to Claim 3, characterised in that the tubular structure (2) consists of a set of tubes (9) connected to collectors (11,12).

8. Device according to Claim 3, characterised in that the heat exchanger (2) comprises at least one float, especially of variable floatability.

9. Device according to Claim 3, characterised in that the heat exchanger (2) is made from a material whose density is less than the density of the winemaking juice.

10. Device according to Claim 3, characterised in that the dimensions of the heat exchanger (2) are adapted so as to occupy practically the entire surface of the winemaking vessel for which it is designed.

11. Device according to Claim 3, characterised in that the dimensions of the heat exchanger (2) are less than the surface area of the winemaking vessel and adapted so as to constitute a module which can be juxtaposed with one or more similar modules.

12. Device according to Claim 3, characterised in that the heat exchanger comprises a net or mesh structure, designed to support the tubular structure.

13. Device according to Claim 3, characterised in that it is connected to a thermodynamic installation with automatic thermostatic control.

14. Device according to Claim 13, characterised in that the thermodynamic installation with automatic thermostatic control is connected to at least one short circuit hot and cold water reservoir-heat exchanger (20).

15. Device according to Claim 13, characterised in that several reservoirs-heat exchangers (20) are provided in order to simultaneously ensure the automatic thermostatic control of several heat exchangers (2) according to the requirements of the winemaking process, such that the heat exchanger(s) in the cooling phase can transfer their calories to the heat exchangers in the heating phase.

16. Device according to Claim 13, characterised in that the thermodynamic installation with thermostatic control is connected to a condenser-evaporator (22) designed to provide, where appropriate, the additional heat.

## Patentansprüche

1. Verfahren zur Temperaturregelung bei der Weinherstellung,
**dadurch gekennzeichnet,**
daß eine Temperaturregelung der verschiedenen Stadien der Weinherstellung mittels eines in wenigstens einem flexiblem Tauscher zirkulierenden Wärmeübertragungsfluids bewirkt wird, wobei der Tauscher unabhängig vom Behälter ist und auf dem Saft der weinherstellung schwimmt und wobei sich dessen temperaturregelnde Wirkung in einer horizontalen Ebene erstreckt, wodurch ein Temperaturschichtungsphänomen begünstigt wird.

2. Verfahren nach Anspruch 1,
**dadurch gekennzeichnet,**
daß das Wärmeübertragungsfluid in wenigstens zwei flexiblen Tauschern zirkuliert, wobei sich der eine in der Maische-Phase befindet und sich der andere in der Saft-Phase befindet und daß die Temperatur des Wärmeübertragungsfluids den verschiedenen Stadien der Weinherstellung angepaßt ist.

3. Vorrichtung zur Durchführung des Verfahrens nach einem der Ansprüche 1 und 2,
**dadurch gekennzeichnet,**
daß sie wenigstens einen Wärmetauscher (2) umfaßt zur Zirkulation von Wärmeübertragungsfluid, wobei der Tauscher beweglich ist und geeignet ist, auf dem Saft bei der Weinherstellung zu schwimmen und eine flexible oder halbstarre Rohrkonstruktion umfaßt, die aus neutralem Material besteht und dazu vorgesehen ist, in einer horizontalen Ebene angeordnet zu werden und Zuführungs- und Auslaßrohrleitungen umfaßt.

4. Vorrichtung nach Anspruch 3,
**dadurch gekennzeichnet,**
daß die Rohrkonstruktion (2) durch ein kontinuierliches Rohrelement gebildet ist, das in der Form einer abgeflachten Spirale angeordnet ist.

5. Vorrichtung nach Anspruch 4,
**dadurch gekennzeichnet,**
daß die Wicklungen des kontinuierlichen Rohrelements durch eine kontinuierliche Materialschicht verbunden sind.

6. Vorrichtung nach Anspruch 4,
**dadurch gekennzeichnet,**
daß die Wicklungen des kontinuierlichen Rohrelements durch Brücken aus in diskontinuierlicher Art und Weise angeordneten Materials verbunden sind.

7. Vorrichtung nach Anspruch 3,
**dadurch gekennzeichnet,**
daß die Rohrkonstruktion (2) durch eine Gesamtheit von Rohren (9) gebildet ist, welche an Verteilungsleitungen (11, 12) angeschlossen sind.

8. Vorrichtung nach Anspruch 3,
**dadurch gekennzeichnet,**
daß der Wärmetauscher (2) wenigstens einen Schwimmer, insbesondere mit variablem Auftrieb, umfaßt.

9. Vorrichtung nach Anspruch 3,
**dadurch gekennzeichnet,**
daß der Wärmetauscher (2) aus einem Material besteht, dessen Dichte kleiner als die Dichte des Safts der weinherstellung ist.

10. Vorrichtung nach Anspruch 3,
**dadurch gekennzeichnet,**
daß die Abmessungen des Wärmetauschers (2) geeignet sind, um im wesentlichen die Oberfläche des Weinherstellungsbehälters, für den er bestimmt ist, einzunehmen.

11. Vorrichtung nach Anspruch 3,
**dadurch gekennzeichnet,**
daß die Abmessungen des Wärmetauschers (2) kleiner sind, als die Oberfläche des Weinherstellungsbehälters und geeignet sind, um ein Modul zu bilden, das mit einem oder mehreren ähnlichen Modulen nebeneinanderlegbar ist.

12. Vorrichtung nach Anspruch 3,
**dadurch gekennzeichnet,**
daß der Wärmetauscher eine Gitter- oder Netzkonstruktion umfaßt, die zur Unterstützung der Rohrkonstruktion vorgesehen ist.

13. Vorrichtung nach Anspruch 3,
**dadurch gekennzeichnet,**
daß sie mit einer thermodynamischen Automatik-Thermostat-Steueranlage verbunden ist.

14. Vorrichtung nach Anspruch 13,
**dadurch gekennzeichnet,**
daß die thermodynamische Automatik-Thermostat-Steueranlage wenigstens mit einem Kalt- und Warmwasser-Tauscher-Reservoir (20) kurzgeschlossen verbunden ist.

15. Vorrichtung nach Anspruch 13,
**dadurch gekennzeichnet,**
daß mehrere Tauscher-Reservoire (20) vorgesehen sind, um gleichzeitig die automatische Thermostat-Steuerung mehrerer Tauscher (2) gemäß den Bedürfnissen der Weinherstellung sicherzustellen, derart daß der (oder die) Tauscher während der Abkühlphase ihre Wärme den Tauschern in der Erwärmungsphase übergeben.

16. Vorrichtung nach Anspruch 13,
**dadurch gekennzeichnet,**
daß die thermodynamische Thermostat-Steueranlage mit einem Kondensator-Verdampfer (22) verbunden ist, der vorgesehen ist, um eine eventuelle Wärmezugabe sicherzustellen.
